# FASCICULE DE BREVET EUROPEEN

(11) **EP 2 214 245 B1**
(45) Date de publication et mention de la délivrance du brevet: **03.10.2012**
(21) Numéro de dépôt: 09180914.5
(22) Date de dépôt: 29.12.2009
(51) Int. Cl.: H01M 8/04, H01M 8/06

(54) **Gestion de l'eau dans une pile à combustible**
Wasserhaushalt in einer Brennstoffzelle
water management in a fuel cell

(30) Priorité: 19.01.2009 FR 0950312
(43) Date de publication de la demande: 04.08.2010
(73) Titulaire: STMicroelectronics (Tours) SAS, 37100 Tours (FR); Commissariat à l'Énergie Atomique et aux Énergies Alternatives, 75015 Paris (FR)
(72) Inventeur: Karst, Nicolas, 57600, FOLKLING (FR); Faucheux, Vincent, 38250, LANS EN VERCORS (FR); Laugier, Christelle, 38140, RIVES (FR); Laurent, Jean-Yves, 38420, DOMENE (FR)
(74) Mandataire: de Beaumont, Michel

(56) Documents cités:
- WO-A-2006/113469
- WO-A-2008/148581
- US-A1- 2005 136 300
- US-A1- 2007 104 996

## Description

### Domaine de l'invention

La présente invention concerne les piles à combustible et en particulier les piles à combustible à hydrogène-oxygène et concerne plus particulièrement la gestion de l'eau dans une pile à combustible.

Les piles à combustible à hydrogène-oxygène sont particulièrement adaptées à être installées dans des dispositifs portables tels que des téléphones ou des ordinateurs portables.

### Exposé de l'art antérieur

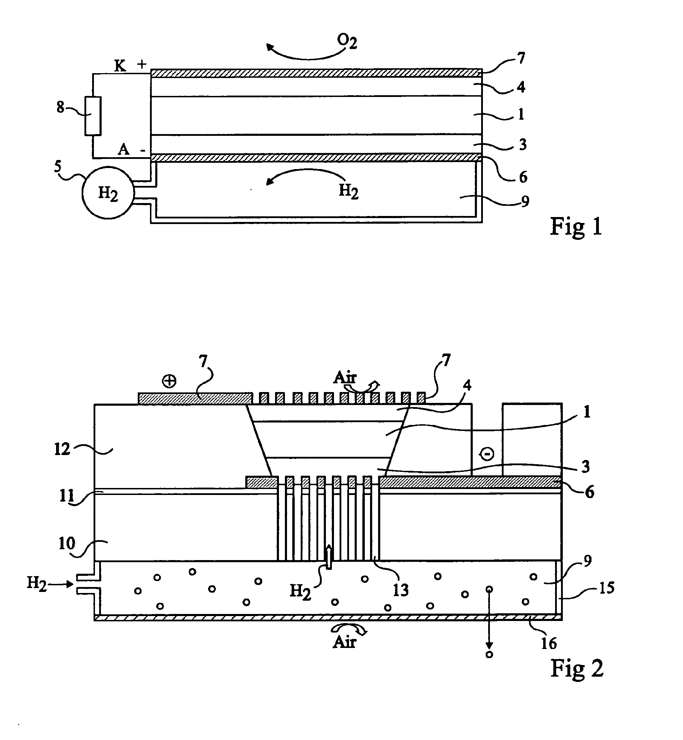

Comme l'illustre la figure 1, une pile à combustible à hydrogène-oxygène comprend une couche ou feuille d'un électrolyte 1 prise en sandwich entre deux couches ou feuilles de catalyseurs 3 et 4 revêtues de couches conductrices 6 et 7 destinées à la prise de contact. La face supérieure de la pile est en contact avec de l'oxygène, par exemple l'air ambiant, et la face inférieure de la pile est en contact avec de l'hydrogène.

Dans ces conditions, quand la pile est connectée à une charge 8, il apparaît une tension positive du côté de la face supérieure ou cathode et une tension négative du côté de la face inférieure ou anode et un courant circule dans la charge. Du côté anode, le catalyseur transforme des molécules d'hydrogène gazeux en deux protons et deux électrons, les protons se déplacent à partir de la couche de catalyseur d'anode à travers la couche d'électrolyte vers la couche de catalyseur de cathode où se produit la réaction 2H⁺+½O₂+2e⁻ → H₂0, les deux électrons circulant à travers la charge.

De façon courante, l'électrolyte 1 est du Nafion et le catalyseur 3, 7 est en un mélange de carbone platine, comprenant par exemple quelques pourcents de platine. Le catalyseur contient aussi de préférence une certaine quantité de Nafion, par exemple 20 à 40 %.

Les conducteurs 6 et 7 sont par exemple des couches d'or très minces pour être à la fois conductrices et perméables à l'hydrogène ou à l'oxygène. Les conducteurs 6 et 7 peuvent aussi être constitués de grilles d'or.

La face supérieure de la pile à combustible peut être libre pour être en contact avec l'air ambiant. Par contre, la face inférieure doit être protégée pour être en contact seulement avec une source d'hydrogène. On prévoit par exemple une chambre tampon 9 reliée à une source d'hydrogène 5.

Comme on l'a indiqué précédemment, la réaction se produisant côté cathode entraîne la génération d'eau. L'eau a tendance à traverser les couches poreuses de catalyseur de cathode, d'électrolyte, de catalyseur d'anode et d'électrode inférieure 6 pour s'accumuler dans la chambre tampon d'hydrogène 9, surtout si la pile est amenée à fonctionner à une forte densité de courant.

Ainsi, on a imaginé divers systèmes de purge pour éliminer l'eau présente dans la chambre tampon et éviter de "noyer" la pile. Les systèmes proposés jusqu'à présent sont des systèmes complexes impliquant l'utilisation de valves.

La demande de brevet US 2007/0104996 décrit une pile à combustible à gestion de l'eau.

### Résumé

Un objet de la présente invention est de prévoir un système de gestion de l'eau dans une pile à combustible à hydrogène-oxygène qui soit particulièrement simple et facile à mettre en oeuvre.

Un autre objet de la présente invention est de prévoir une réutilisation de l'eau éventuellement rétrodiffusée dans la chambre tampon.

Ainsi, un mode de réalisation de la présente invention prévoit une pile à combustible à hydrogène-oxygène comprenant, du côté anode, une chambre tampon de stockage d'hydrogène, ladite chambre comprenant une paroi dont au moins une partie est semi-perméable, étanche aux gaz (hydrogène-oxygène-air) et perméable à l'eau.

Selon un mode de réalisation de la présente invention, la paroi semi-perméable est en Nafion.

Selon un mode de réalisation de la présente invention, la paroi semi-perméable est constituée d'une grille imprégnée de Nafion.

Selon un mode de réalisation de la présente invention, la paroi semi-perméable comprend une feuille de Nafion insérée entre deux grilles.

Selon un mode de réalisation de la présente invention, la paroi semi-perméable communique avec une chambre à NaBH₄ de génération d'hydrogène en présence d'eau.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 représente de façon très schématique une pile à combustible classique à hydrogène-oxygène ;
la figure 2 représente un mode de réalisation de pile à combustible à hydrogène-oxygène selon un mode de réalisation de la présente invention ; et
la figure 3 représente un exemple de pile à combustible à hydrogène-oxygène selon un mode de réalisation de la présente invention associée à une cartouche de génération d'hydrogène.

Par souci de clarté, de mêmes éléments ont été désignés par de mêmes références aux différentes figures et, de plus, comme cela est habituel dans la représentation des circuits intégrés, les diverses figures ne sont pas tracées à l'échelle.

### Description détaillée

De façon générale, la présente invention prévoit de remplacer au moins une paroi ou une partie de paroi de la chambre 9 de la pile illustrée en figure 1 par un matériau semi-perméable, perméable à l'eau et imperméable aux gaz, en particulier à l'hydrogène et à l'air. Ainsi, la vapeur d'eau mélangée à l'hydrogène dans la chambre 9 a tendance à migrer vers l'atmosphère extérieure, pour autant que le taux d'humidité ambiant soit inférieur au taux d'humidité qui se crée dans la chambre 9. Cette migration de la vapeur d'eau est favorisée par le fait que la chambre 9 se trouve en légère surpression d'hydrogène par rapport à l'air ambiant.

Un exemple de matériau semi-perméable est le Nafion, qui est un matériau couramment utilisé comme matériau d'électrolyte de la pile et qui est donc à disposition pour un fabricant de pile à combustible.

La figure 2 représente une réalisation de pile à combustible utilisant des techniques de microélectronique. Cette cellule est formée sur une tranche de silicium 10 éventuellement revêtue d'une première couche isolante fine 11 et d'une deuxième couche isolante 12 plus épaisse. Une ouverture est formée dans une partie de la couche isolante 12. Dans cette ouverture sont successivement déposés une couche de catalyseur 3, un électrolyte 1 et une deuxième couche de catalyseur 4 (éventuellement, les épaisseurs de la couche isolante 12 et des couches 3, 1 et 4 sont telles qu'au moins certaines des couches 3, 1 et 4 débordent largement au-delà de l'ouverture). Une électrode inférieure 6, d'anode, permet de prendre un contact sur la couche de catalyseur inférieure 3. Une électrode supérieure 7, de cathode, permet de prendre un contact sur la couche de catalyseur supérieure 4. Les électrodes 6 et 7 sont munies d'ouvertures, et des canaux 13 sont formés dans la plaquette de silicium 10 en regard des ouvertures dans la métallisation de face inférieure. Par ailleurs, on a représenté une chambre 9 du côté de la face inférieure de la pile, cette chambre sert de réservoir tampon d'hydrogène et est connectée à une source d'hydrogène ou à une source de production d'hydrogène.

Ceci ne constitue qu'un exemple de réalisation. Divers types de piles à combustible réalisables sous la forme illustrée en figure 2 sont connus dans la technique. Par exemple, la partie de la plaquette de silicium qui porte la cellule de pile proprement dite est de préférence amincie. C'est cette partie amincie de la plaquette 10 qui est percée de canaux 13 permettant le passage d'hydrogène. On comprendra que, d'une façon générale, toutes les surfaces de la plaquette sont revêtues d'un isolant constitué au moins d'oxyde de silicium natif.

On forme par tout moyen, par exemple par dépôt au jet d'encre, les couches 3 et 4 de catalyseur. La couche de Nafion 1 est déposée, par exemple à la tournette. Dans une telle pile à combustible, la puissance pouvant être fournie est notamment proportionnelle à la surface occupée par la cellule dans le plan de la plaquette de silicium. De façon courante, la surface utile d'une pile à combustible du type décrit en relation avec la figure 2 est de 1 à 3 cm².

Dans le mode de réalisation illustré en figure 2, les parois verticales 15 de la chambre 9, orthogonales à la grande dimension de la pile, sont en tout matériau choisi, par exemple en matière plastique, et la paroi de fond 16 de la chambre 9 est constituée d'une feuille de Nafion.

En pratique, si on considère que la feuille de Nafion risque d'être trop fragile, on pourra "armer" cette feuille de Nafion, c'est-à-dire par exemple la former autour d'une grille métallique. On pourra également enserrer cette feuille entre deux grilles métalliques. La ou les grilles métalliques peuvent par exemple être constituées d'une feuille d'alumine microperforée.

La figure 2 illustre seulement de façon très schématique un exemple de réalisation de la présente invention. En pratique, une pile à combustible comprendra souvent une pluralité de cellules de piles à combustible telles que celle illustrée en figure 2 montées dans un boîtier commun de sorte que toutes les faces supérieures soient apparentes et en contact avec l'air et que toutes les faces inférieures soient en regard d'une même chambre à hydrogène. Un exemple d'un tel boîtier est donné dans la demande de brevet européen EP-A-1939964 (B7988) de STMicroelectronics. C'est alors une paroi ou une portion de paroi de cette chambre commune qui sera réalisée en un matériau semi-perméable.

Un avantage supplémentaire de la présente invention est que l'eau s'échappant à travers la membrane semi-perméable peut être récupérée pour aider à la fourniture d'hydrogène. En effet, en association avec les piles à combustible à hydrogène-oxygène, on prévoit que la source d'hydrogène, plutôt que d'être constituée d'une cartouche d'hydrogène sous pression, peut être constituée d'une cartouche comprenant du borohydrure de sodium (NaBH₄) couplée à un réservoir d'eau. Pour économiser l'eau contenue dans le réservoir d'eau et réduire la dimension et la périodicité de recharge de ce réservoir, on peut utiliser, quand il en est produit, l'eau s'échappant de la membrane semi-perméable.

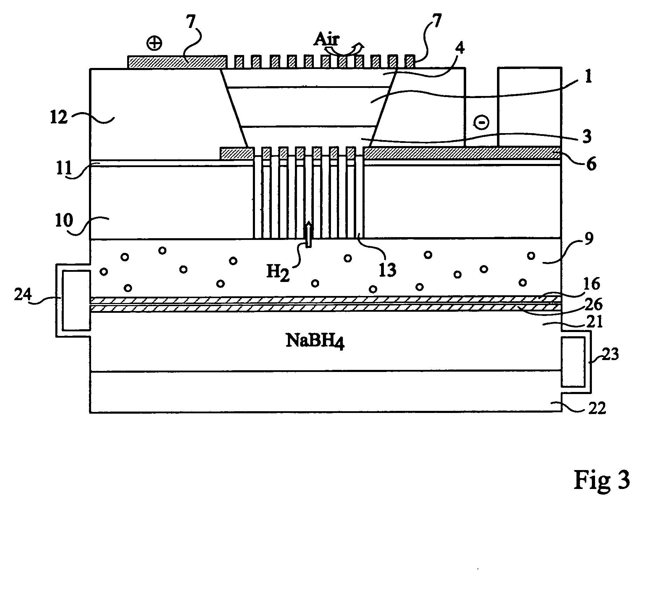

La figure 3 représente un exemple d'une telle application. La partie haute de la figure 3 correspond à ce qui est représenté en figure 2. Sous la membrane semi-perméable 16 est prévue une cartouche de production d'hydrogène comprenant une chambre 21 remplie de NaBH₄ et un réservoir d'eau 22. Le réservoir d'eau est couplé par une conduite 23 à la chambre 21. Quand on veut fournir de l'hydrogène, le réservoir d'eau est mis sous une légère pression pour que l'eau pénètre dans la chambre 21 remplie de NaBH₄. De l'hydrogène est produit et est transféré par une conduite 24 dans la chambre tampon 9. Divers moyens connus comprenant des électrovannes sont prévus pour assurer le fonctionnement du dispositif de génération d'hydrogène 21, 22.

Comme cela est illustré en figure 3, on peut prévoir que la partie supérieure de la chambre 21 contenant le NaBH₄, ou au moins une partie de cette partie supérieure, est également constituée d'une membrane semi-perméable 26 disposée en regard de la membrane semi-perméable 16. On pourra aussi prévoir que la partie supérieure de la chambre 21 comporte une ouverture venant s'accoler à la membrane semi-perméable 16. Ainsi, quand de l'eau s'échappe de la chambre 9, elle pénètre dans la réserve de NaBH₄ et participe à la production d'hydrogène en économisant l'eau contenue dans le réservoir 22.

La présente invention est susceptible de nombreuses variantes et modifications qui apparaîtront à l'homme de l'art. Notamment, divers types de cellules à hydrogène connus pourront être utilisés. En outre, on peut prévoir que la chambre 9, au lieu d'être une chambre vide, est remplie d'un matériau poreux, tel que du silicium poreux et il sera alors plus facile de former la membrane semi-perméable 16 sur la face inférieure de la couche de silicium poreux.

La présente invention a été décrite plus particulièrement en relation avec des modes de réalisation concernant une réalisation particulière de pile à combustible dans laquelle divers matériaux sont déposés par couches successives. L'invention s'applique également au cas où la pile est formée à partir de feuilles des divers matériaux accolées et par exemple assemblées sous pression.

Divers modes de réalisation avec diverses variantes ont été décrits ci-dessus. L'homme de l'art pourra combiner divers éléments de ces divers modes de réalisation et variantes sans faire preuve d'activité inventive. De plus, des matériaux autres que du Nafion pourront être utilisés pour l'électrolyte et des matériaux autres que du carbone/platine pourront être utilisés pour le catalyseur, par exemple du carbone/platine-cobalt ou du carbone/platine-nickel.

## Revendications

1. Pile à combustible à hydrogène-oxygène comprenant, du côté anode, une chambre tampon (9) de stockage d'hydrogène, dans laquelle ladite chambre comprend une paroi dont au moins une partie est semi-perméable (16), étanche aux gaz (hydrogène-oxygène-air) et perméable à l'eau et dans laquelle la paroi semi-perméable est adaptée à communiquer avec une chambre à NaBH₄ (21) de génération d'hydrogène en présence d'eau.

2. Pile à combustible selon la revendication 1, dans laquelle la paroi semi-perméable est en Nafion.

3. Pile à combustible selon la revendication 1, dans laquelle la paroi semi-perméable est constituée d'une grille imprégnée de Nafion.

4. Pile à combustible selon la revendication 1, dans laquelle la paroi semi-perméable comprend une feuille de Nafion insérée entre deux grilles.

## Claims

1. A hydrogen-oxygen fuel cell comprising, on the anode side, a hydrogen storage buffer chamber (9), wherein said chamber comprises a wall having at least a semi-permeable portion (16), impermeable to gases (hydrogen-oxygen-air) and permeable to water and wherein the semi-permeable wall is capable of communicating with a NaBH₄ chamber (21) for generating hydrogen in the presence of water.

2. The fuel cell of claim 1, wherein the semi-permeable wall is made of Nafion.

3. The fuel cell of claim 1, wherein the semi-permeable wall is formed of a grid impregnated with Nafion.

4. The fuel cell of claim 1, wherein the semi-permeable wall comprises a Nafion sheet inserted between two grids.

## Patentansprüche

1. Eine Wasserstoff-Sauerstoff-Brennstoffzelle, die auf der Anodenseite eine Speicherkammer (9) für eine Wasserstoffspeicherung aufweist, wobei die Kammer eine Wand mit wenigstens einem semipermeablen Teil (16) aufweist, der für Gase (Wasserstoff-Sauerstoff-Luft) undurchlässig und für Wasser durchlässig ist, und wobei die semipermeable Wand in der Lage ist mit einer NaBH₄-Kammer (21) für die Erzeugung von Wasserstoff in der Gegenwart von Wasser zu kommunizieren.

2. Brennstoffzelle nach Anspruch 1, wobei die semipermeable Wand aus Nafion hergestellt ist.

3. Brennstoffzelle nach Anspruch 1, wobei die semipermeable Wand aus einem mit Nafion imprägnierten Gitter ausgebildet ist.

4. Brennstoffzelle nach Anspruch 1, wobei die semipermeable Wand ein Nafion-Flächenelement aufweist, das zwischen zwei Gittern eingesetzt ist.
